**Europäisches Patentamt**

**European Patent Office**

**Office européen des brevets**

(19)

(11) Veröffentlichungsnummer : **0 432 143 B1**

(12) **EUROPÄISCHE PATENTSCHRIFT**

(45) Veröffentlichungstag der Patentschrift :
**08.06.94 Patentblatt 94/23**

(21) Anmeldenummer : **91104023.6**

(22) Anmeldetag : **28.10.87**

(51) Int. Cl.⁵ : **G01M 3/32**

(54) **Verfahren und Verwendung einer Anordnung zur Prüfung mindestens eines Hohlkörpers auf sein Volumenverhalten.**

(43) Veröffentlichungstag der Anmeldung :
**12.06.91 Patentblatt 91/24**

(45) Bekanntmachung des Hinweises auf die
Patenterteilung :
**08.06.94 Patentblatt 94/23**

(84) Benannte Vertragsstaaten :
**AT BE CH DE ES FR GB GR IT LI LU NL SE**

(56) Entgegenhaltungen :
**EP-A- 0 060 548**
**EP-A- 0 238 861**
**DE-A- 1 473 363**
**DE-C- 3 736 375**
**PATENT ABSTRACTS OF JAPAN, Band 12, Nr. 2 (P-652)(2849), 7. Januar 1988; & JP-A 62163946**
**TECHNISCHES MESSEN, Band 54, Nr. 5, 1987, Seiten 180-184, München, DE; W. GERK: "Dichtheitsprüfung in der Serienfertigung mit dem Differenzdruckverfahren"**

(60) Veröffentlichungsnummer der früheren
Anmeldung nach Art. 76 EPü : **0 313 678**

(73) Patentinhaber : **Lehmann, Martin**
**Obere Farnbühlstrasse 1**
**5610 Wohlen 1 (CH)**

(72) Erfinder : **Lehmann, Martin**
**Obere Farnbühlstrasse 1**
**5610 Wohlen 1 (CH)**

(74) Vertreter : **Troesch Scheidegger Werner AG**
**Patentanwälte,**
**Siewerdtstrasse 95,**
**Postfach**
**CH-8050 Zürich (CH)**

## Beschreibung

Die vorliegende Erfindung betrifft ein Verfahren und eine Verwendung einer Anordnung zur Erfassung des Volumenverhaltens eines Hohlkörpers aufgrund einer Druckbeanspruchung seiner Wände.

Bei der Herstellung von Behältnissen für Lebensmittel werden verschiedene Verfahren eingesetzt, wie z.B. Schweissverfahren. Nebst der Dichtheit derartiger Hohlkörper ist auch bei formfesten Behältnissen die Steifheit ihrer Wandungen, insbesondere im Bereiche von Verbindungsstellen, ein wesentliches Kriterium für ihre Gebrauchstüchtigkeit. Zu steife oder zu schwache Partien, beispielsweise Schweissnähte, können im Gebrauch zu Rissen führen, beispielsweise in Bereichen, in welchen unterschiedlich steife Partien verbunden sind.

Die vorliegende Erfindung geht von der Aufgabe aus, ein Prüfverfahren für derartige Hohlkörper zu schaffen sowie eine Anordnung einzusetzen, womit auf einfache Art und Weise und mit grosser Zuverlässigkeit derartige Hohlkörper sollen geprüft werden können.

Zur Lösung dieser Aufgabe wird erfindungsgemäss beim Verfahren eingangs genannter Art vorgeschlagen, nach dem Wortlaut von Anspruch 1 vorzugehen.

Bei Vorgehen nach Anspruch 2 wird ausgenützt, dass, wenn ein derartiger Hohlkörper in eine Prüfkammer eingeführt wird und in der Prüfkammer bezüglich des Hohlkörperinnendruckes ein positiver oder negativer Differenzdruck eines Prüfgases, vorzugsweise Luft, angelegt wird, sich einerseits nach Massgabe der Dichte bzw. Leckage am Hohlkörper ein Druckausgleich zwischen Prüfkammerndruck und Innendruck des Hohlkörpers ergibt, dessen Zeitverhalten ein Mass für die Grösse einer allenfalls vorliegenden Leckage ist.

Anderseits wirkt sich eine Volumenzu- bzw. -abnahme des Hohlkörpers aus - Zunahme bei vom Hohlkörperinnern nach aussen gerichtetem Differenzdruck, Abnahme bei von der Prüfkammer nach den Hohlkörperinnern gerichtetem Differenzdruck - und ist ein Mass für die Elastizität der Hohlkörperwandung.

Um eine Prüfkammer mit vom Volumen des Hohlkörpers abhängigem Volumen mit einem vorgegebenen Druckwert zu beaufschlagen, praktisch als Anfangswert, und dann, nach druckmässiger Isolierung von Kammer und Hohlkörper, aus dem Druckverhalten auf die obgenannten Kriterien zu schliessen, wird eine Kammer mit vorgegebenem Volumen auf einen vorgegebenen Druck aufgeladen und dann diese Kammer mit der Prüfkammer verbunden. Der Druck in der Prüfkammer ergibt sich, bei Verbinden der beiden Kammern, einerseits aus dem Ladedruck der Kammer und dem Volumenverhältnis der beiden Kammern mit dem Hohlkörper. Dabei kann zur Erhöhung des Mess-Signals die Prüfkammer vorgängig mit einem positiven oder negativen Druck bezüglich Atmosphärendruck vorgeladen werden.

Um im weiteren für die Auswertung des Prüfkammerninnendruckes einen definierten Referenzdruck zu schaffen und die Auswertung dann aufgrund einer Differenzdruckmessung vornehmen zu können, wird weiter vorgeschlagen, dass man, vor der Auswertung, die Prüfkammer erst mit einem Referenzdrucksystem verbindet, dann das Referenzdrucksystem von der Kammer abtrennt und dessen Druck als Referenzdruck für die nachfolgende Auswertung des Kammerndruckes einsetzt.

Dadurch, dass das Referenzdrucksystem vorerst mit der Kammer verbunden ist, stellt sich in ihr der gleiche Druck wie in der Prüfkammer ein. Wird dann das Referenzdrucksystem von der Kammer abgetrennt, bleibt der dannzumal in der Prüfkammer vorherrschende Druckwert im Referenzdrucksystem gespeichert und dient bei der nachfolgenden Auswertung als Referenzdruck für eine Differenzdruckmessung.

Dadurch, dass man im weiteren die Auswertung am Kammerndruck zu einem vorgegebenen Zeitpunkt punktuell vornimmt, wird diese äusserst einfach. In einem vorgegebenen Zeitpunkt wird überprüft, ob der IST-Kammerndruck einem vorgängig erfassten SOLL-Kammerndruck entspricht. Wird der IST-Prüfkammerndruck zu zwei oder mehreren Zeitpunkten oder gar in seinem kontinuierlichen Zeitverlauf mit SOLL-Druckwerten zu zwei oder mehreren Zeitpunkten oder mit einem SOLL-Druck-Zeitverlauf verglichen, so ergibt sich eine Erhöhung der Auswertungsauflösung, z.B. durch Integrierung des Vergleichsresultats bzw. der SOLL-IST-Differenz.

Vorzugsweise werden im weiteren vorgegebene SOLL-Druckwerte oder SOLL-Druckverläufe abgespeichert und bei der obgenannten Prüfung jeweils als Vergleichswert mit den dann registrierten IST-Werten verglichen, um z.B. auf einen Hohlkörperausschuss aufgrund zu steifer bzw. zu elastischer Wandpartien zu schliessen.

Aus der EP-A-0060548 ist ein Verfahren und eine Vorrichtung zur Dichteprüfung elektrischer Bauelemente bekannt. Das zu prüfende Bauelement wird in eine Prüfkammer eingelegt, die druckbeaufschlagt wird. Der Druck in der Prüfkammer wird über eine Kammer mit gegebenem Volumen, welche auf einen vorgegebenen Druckwert aufgeladen wird, druckbeaufschlagt und aus dem Verhalten des Druckes im Differenzvolumen zwischen Prüfkammervolumen und Bauelementvolumen auf das Dichteverhalten des Bauelementes geschlossen.

Diese an sich bekannte Anordnung eignet sich nach dem Wortlaut von Anspruch 9 ausgezeichnet für die der vorliegenden Erfindung zugrundeliegende Prüfung von Hohlkörpern auf ihr Volumenverhalten.

Die Erfindung wird anschliessend beispielsweise anhand von Figuren erläutert.

Es zeigen:

Fig. 1 anhand eines Funktionsblockdiagrammes den prinzipiellen Aufbau einer erfindungsgemässen Anordnung, die nach dem erfindungsgemässen Verfahren arbeitet,

Fig. 2a den qualitativen Verlauf von Hohlkörperinnendruck und Prüfkammerinnendruck über der Zeit, bei nach dem Hohlkörperinnern gerichtetem Differenzdruck zwischen Prüfkammer und Hohlkörperinnendruck, bei völlig starren und dichten Hohlkörperwänden einerseits und bei wohl dichten, aber unter der Druckbelastung nachgebenden Hohlkörperwandungen,

Fig. 2b qualitativ eine Darstellung gemäss Fig. 2a bei unterschiedlichen Leckagen des Hohlkörpers,

Fig. 3 ausgehend von der Darstellung gemäss Fig. 1 eine erste Ausführungsvariante, bei der auf konstanten Prüfkammerndruck geregelt wird und die Stellgrösse ausgewertet wird,

Fig. 4 ausgehend von der Darstellung gemäss Fig.1 eine bevorzugte Ausführungsvariante der Druckregistrierung als Differenzdruckmessung,

Fig. 5 ausgehend von der Darstellung gemäss Fig.1 bzw. Fig. 4 eine bevorzugte Realisationsform der Druckbeaufschlagungsanordnung für die Prüfkammer sowie mit einer Zeitsteueranordnung zur Zeitsteuerung der einzelnen Verfahrensphasen.

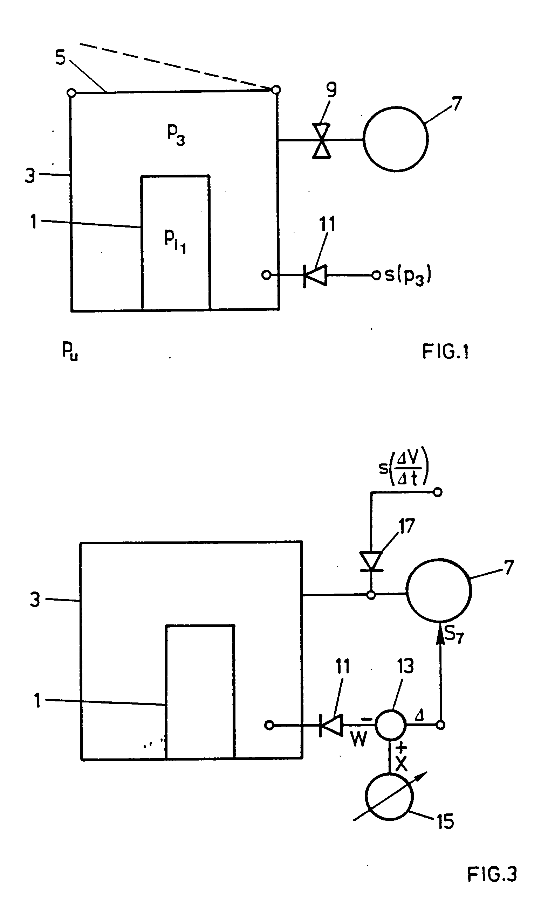

In Fig. 1 ist anhand eines schematischen Blockdiagramms eine erste Ausführungsvariante des erfindungsgemässen Verfahrens dargestellt bzw. einer Anordnung zu dessen Ausführung. Ein Hohlkörper 1 soll daraufhin geprüft werden, wie

sich sein Volumen aufgrund einer Druckbeanspruchung verändert, aufgrund elastischer Verformung seiner Wände. Der Hohlkörper 1 wird in eine Prüfkammer 3 eingebracht, beispielsweise durch eine mittels eines Deckels 5 dicht verschliessbare Einführöffnung. Dabei herrscht im Innern des Hohlkörpers 1 ein Innendruck $p_{I1}$, der üblicherweise dem Umgebungsdruck $p_u$ entspricht. Nach hermetischem Verschliessen der Prüfkammer 3 wird die Prüfkammer 3 unter Druck gesetzt, indem eine Druckmediumsquelle 7 der Prüfkammer 3 aufgeschaltet wird. Als Druckmedium wird ein Gas, vorzugsweise Luft, eingesetzt. Dadurch wird in der Prüfkammer 3, mit Bezug auf den Innendruck $p_{II}$ innerhalb des Hohlkörpers 1, ein positiver oder negativer Differenzdruck erzeugt.

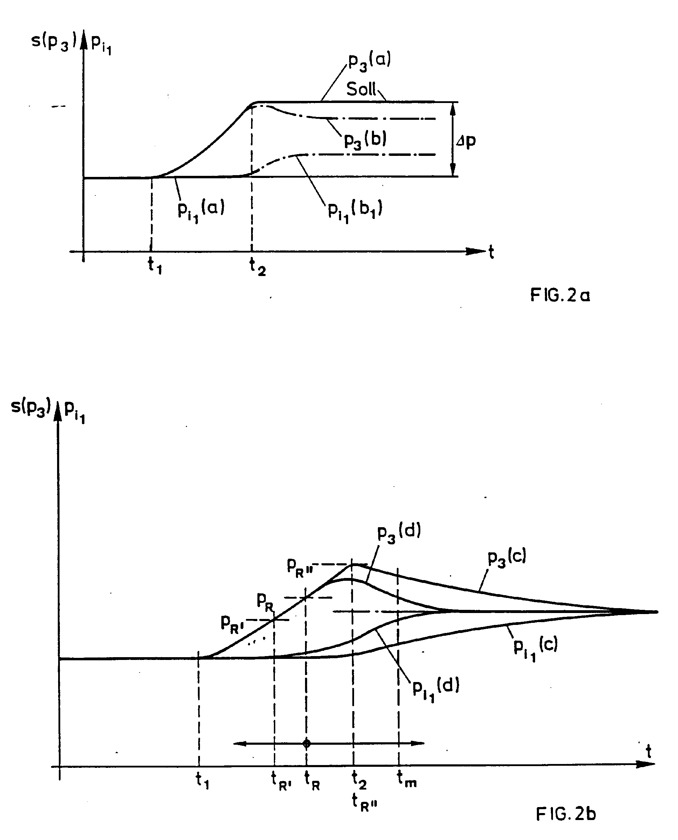

Der Druck-innerhalb der prüfkammer 3 ist in Fig. 1 mit $p_3$ bezeichnet. Daraufhin wird das Drucksystem, bestehend aus Prüfkammer 3 und zu prüfendem Hohlkörper 1 von der Druckmediumsquelle 7, wie mit einem Absperrventil 9 abgetrennt und sich selber überlassen. Ist der Hohlkörper 1 bezüglich des verwendeten Gases dicht und seine Wandungen derart starr, dass die aus der Druckdifferenz zwischen $p_3$ und $p_{I1}$ resultierenden Kräfte auf die Wandungen keine merklichen Deformationen bewirken, so wird mit einem, wie in Fig. 1 schematisch bei 11 dargestelltem Drucksensor, beispielsweise als mechanisch/elektrischer Wandler, wie als piezzo-Drucksensor ausgebildet, ein Ausgangssignal $s(p_3)$, wie in Fig. 2a qualitativ dargestellt, registriert.

In Fig. 2 ist qualitativ über der Zeit t der Druck in der Prüfkammer 3 entsprechend dem Signal $s(p_3)$ sowie der Innendruck $p_{I1}$ im Hohlkörper 1 aufgetragen. Bis zum Zeitpunkt $t_1$, bis wohin der Hohlkörper 1 in die prüfkammer 3 eingeführt worden ist und letztere mit dem Deckel 5 dichtend verschlossen wurde, sind $p_3$ und $p_{II}$ gleich dem Umgebungsdruck $P_u$. Im Zeitpunkt $t_1$ wird begonnen, die Prüfkammer 3 mit der Quelle 7 unter Druck zu setzen, der Druck in der Prüfkammer 3 steigt. Im oben erwähnten Fall starrer und dichter Hohlkörperwandungen bleibt der Innendruck $p_{II}$ von der Druckänderung in der Prüfkammer 3 unbeeinträchtigt. Im Zeitpunkt $t_2$ wird die Quelle 7 von der Prüfkammer 3 abgetrennt, im vorliegenden Fall bleibt der Prüfkammerndruck $p_3(a)$ mindestens nahezu konstant und ebenso der Innendruck $p_{I1}$ (a) im Hohlkörper 1.

Sind die Wände des Hohlkörpers 1 nicht im oben erwähnten Sinne absolut starr, sondern biegen sich mindestens an gewissen Stellen und nach Massgabe der angelegten Druckdifferenz $\Delta p$ und deren Vorzeichen nach innen oder aussen, so ergeben sich bei nach dem Hohlkörperinnern gerichtetem Differenzdruck die strichpunktiert eingetragenen, qualitativen Verläufe $p_3(b)$ bzw. $p_{I1}$ (b). Analoge Verhältnisse ergeben sich bei nach der Prüfkammer 3 gerichtetem Differenzdruck.

Wie aus diesen qualitativen Verläufen ersichtlich, streben beide Drücke nach kürzerer oder längerer Zeit asymptotisch einem unterschiedlichen, konstanten Grenzwert zu.

In Fig. 2b sind in analoger Darstellung zu Fig. 2a die Verhältnisse bei vorliegenden, unterschiedlich grossen Leckagen am Hohlkörper 1 dargestellt. Bei einer relativ kleinen Leckage gleichen sich Innendruck des Hohlkörpers 1 und Druck zwischen Prüfkammer 3 und Hohlkörper 1 gemäss den qualitativen Verläufen p(c) relativ langsam aus, bei grösseren Leckagen zunehmend schneller, wie beispielsweise mit den Verläufen p(d) dargestellt. Ist generell für intakte dichte Hohlkörper 1 und unter Berücksichtigung einer allfälligen Volumenveränderung des Hohlkörpers 1 durch die Differenzdruckbeanspruchung ein SOLL-Verlauf $p_3$ z.B. gemäss $p_3(b)$ bekannt, so wird ausgangsseitig des Sensors 11 durch Vergleich des IST-Verlaufs mit einem derartigen SOLL-Verlauf beurteilt, wie weit ein geprüfter Hohlkörper dicht ist oder nicht bzw. als Ausschuss zu werten ist oder nicht.

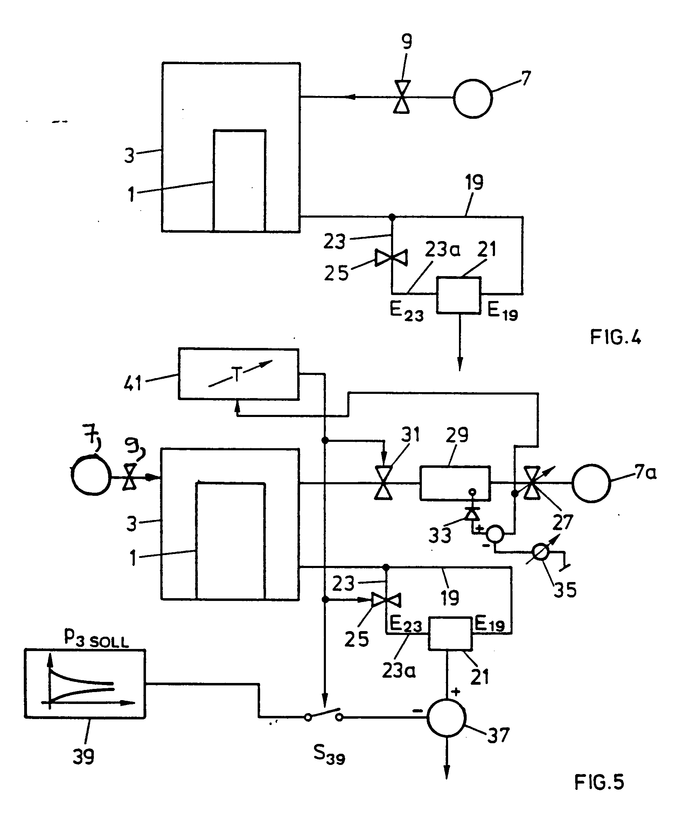

Gemäss Fig. 1 wird hierzu der Druck $p_3$, beispielsweise mit Bezug auf die Umgebungsatmosphäre mit Druck $p_u$ gemessen, wobei vorteilhafterweise und wie im weiteren noch zu beschreiben sein wird, eine Differenzdruckmessung des Druckes $p_3$ bezüglich eines vorgegebenen Referenzdruckes vorgenommen wird. Vorerst wird aber in Fig. 3 eine weitere Variante dargestellt, bei der der Druck in der prüfkammer 3 konstant geregelt wird und der prüfkammer 3 hierzu zu- bzw. abgeführte Druckmediumsmenge bzw. Gasmenge pro Zeiteinheit oder integriert über eine vorgegebene Zeitspanne, als Messgrösse erfasst wird.

Gemäss Fig. 3 wird nach Einbringen des zu prüfenden Hohlkörpers 1 in die dann dicht geschlossene Prüfkammer 3, letztere mittels einer Mediumsquelle 7 unter Druck gesetzt, wie mit Luft oder wiederum evakuiert, und der Innendruck der Prüfkammer 3 als Regelgrösse W mit einem Drucksensor 11 erfasst. Die Regelgrösse W wird an einer Differenzeinheit 13 mit einem Referenzdruck X oder einem referenzdruckentsprechenden Signal verglichen, und die resultierende Regeldifferenz $\Delta$ wird einem Steuereingang $S_7$ der Quelle 7 aufgeschaltet. Mit letzterer als Stellglied wird der Druck in der Prüfkammer 3 auf den an einer Vorgabeeinheit 15 eingestellten SOLL-Wert X gestellt. Das durch die Quelle 7 als Stellglied der Prüfkammer 3 zuzuführende Mediumsvolumen pro Zeiteinheit wird an einem Durchflussfühler 17 erfasst, als Signal $s(\frac{\Delta V}{\Delta t})$, das zur weiteren Auswertung, beispielsweise über eine vorgegebene Zeitspanne, integriert wird.

Es ergeben sich zu den in Fig. 2 gezeigten Verläufen analoge Verläufe des Signals $s(\frac{\Delta V}{\Delta t})$.

In Fig. 4 ist eine bevorzugte Ausführungsvariante der Druckmessung gemäss Fig. 1 an der prüfkammer 3 dargestellt. Während der Druckaufbauphase zwischen den Zeitpunkten $t_1$ und $t_2$ wird die prüfkammer 3 über eine Leitung 19 mit dem einen Eingang $E_{19}$ eines Differenzdrucksensors 21, wie eines piezzo-elektrischen Sensors, verbunden. Ueber eine zweite Leitung 23, mit einem Absperrventil 25, ist die prüfkammer 3 weiter mit dem zweiten Eingang $E_{23}$ des Differenzdrucksensors 21 verbunden. Im Zeitpunkt $t_R$ gemäss den Fig.2, wird das Absperrventil 25 geschlossen, so dass im Leitungsstück $23_a$, als Referenzdrucksystem, zwischen Absperrventil 25 und Eingang $E_{23}$, der dann in der Prüfkammer 3 herrschende Druck aufgebaut bleibt. Dieser Druck in der Verbindung $23_a$ wirkt als Referenzdruck auf den Differenzdrucksensor 21 und da die Leitung 19 in der nachfolgenden Messphase für $t > t_2$ offenbleibt, ergibt sich eine Differenzdruckmessung am Differenzdrucksensor 21 mit Bezug auf den Prüfkammerndruck im Zeitpunkt $t_R$. Wie aus Betrachtung von Fig. 2 ersichtlich, wird der Zeitpunkt $t_R$ fallspezifisch für optimale Messauflösung eingestellt, wie mit $t_{R'}$, $t_{R''}$ und den resultierenden Referenzdrücken $p_R$, $p_{R'}$, $p_{R''}$ dargestellt.

In Fig. 5 ist, ausgehend von der Darstellung von Fig. 4, eine bevorzugte Ausführungsvariante zur Druckbeaufschlagung der Prüfkammer 3 dargestellt. Hierzu ist eine Prüfgasquelle, wie eine Pumpe $7_a$ über ein Absperrventil 27 mit einem Referenzvolumen in einer Referenzkammer 29 verbunden. Letztere ist über ein weiteres Absperrventil 31 mit der Prüfkammer 3 verbunden. Mit der Quelle $7_a$ wird bei vorerst geöffnetem Ventil 27 und gesperrtem Ventil 31 die Referenzkammer 29 mit Prüfgas gefüllt und darin mittels eines Drucksensors 33 der Druck gemessen. Erreicht der mit dem Sensor 33 gemessene Druck einen an einer Referenzsignalquelle 35 eingestellten Referenzdruck, so wird das Ventil 27 gesperrt. Nun wird anschliessend das Ventil 31 geöffnet, womit die Kammern 3 und 29 ein kommunizierendes System bilden und sich nach Massgabe der Volumina in Kammer 29 und in Kammer 3 ein Prüfgasausgleich einstellt. Nach einer Ausgleichsphase, entsprechend dem Zeitabschnitt $t_2$, $t_1$ von Fig. 2 wird, wie anhand von Fig. 4 beschrieben wurde, mit dem Differenzdrucksensor 21 der Verlauf des Differenzdruckes gemessen oder zu einem vorgegebenen Messzeitpunkt $t_m$ gemäss Fig. 2b Unterschiede zwischen einer SOLL-Druckdifferenz und einer IST-Druckdifferenz registriert.

Wie in Fig. 5 weiter dargestellt, wird der Ausgang des Differenzdrucksensors 21 hierzu beispielsweise einer Differenzeinheit 37 zugeführt, welcher, an einem zweiten Eingang, eine, in einer schematisch bei 39 dargestellten Speicher- und Ausgabevorrichtung, wie eines Rechners, eingegebene Normkurve zugeführt wird, so dass am Ausgang der Differenzeinheit 37 die Abweichungen des momentanen Prüfresultates von einem vorgegebenen SOLL-Resultat ausgegeben werden und aufgrund dieser Abweichungen über Intaktheit bzw. Ausschuss des geprüften Hohlkörpers 1 entschieden werden kann. Selbstverständlich kann, wie bereits erwähnt, anstelle des Vergleichs der zeitlichen Verläufe, in einem vorgegebenen Zeitpunkt entsprechend $t_m$ der IST-Differenzdruck am Ausgang des Druckdifferenzsensors 21 mit an der Einheit 39 abgespeicherten SOLL-Werten quasi punktuell verglichen werden. Eine schematisch bei 41 dargestellte Zeittakt-Steuereinheit wird dabei bei Erreichen eines vorgegebenen Druckes in der Referenzkammer 29 ausgelöst und steuert danach, gemäss eingegebenen Zeitspannen T, die Ventile 31, 25 sowie allenfalls die SOLL-Wertaufschaltung bei $S_{39}$ an.

Nach diesem Verfahren und mit der beschriebenen Anordnung können, wie anhand von Fig. 2a erläutert wurde, von erwarteten Verhalten abweichende Formveränderungsverhalten der Hohlkörper erfasst werden, wie beispielsweise bei unzulässig steifen Wandpartien oder unzulässig elastischen.

## Patentansprüche

1. Verfahren zur Prüfung mindestens eines Hohlkörpers (1), bei dem ein gegebenes Volumen (29) auf einen vorgegebenen (35) Druck aufgeladen wird, der vorgegebene Druck in ein vom Volumen des Hohlkörpers (1) abhängiges Volumen (3) entladen wird, dadurch gekennzeichnet, dass der sich nach Entladen einstellende Druck ($p_3$ (a), $p_3$ (b)) in dem vom Volumen des Hohlkörpers abhängigen Volumen (3) als eine die Volumenänderung oder das Volumen des Hohlkörpers (1) bei Druckbeaufschlagung anzeigende Grösse (s ($p_3$)) ausgewertet wird.

2. Verfahren nach Anspruch 1, dadurch gekennzeichnet, dass der Hohlkörper (1) in einer Prüfkammer (3) einer Druckdifferenz zwischen Hohlkörperinnen($p_{i1}$)- und Hohlkörperaussendruck ($p_3$) unterworfen wird und mittels eines Drucksensors (21) der Druck in der Prüfkammer gemessen wird.

3. Verfahren nach Anspruch 2, dadurch gekennzeichnet, dass ein Referenzdrucksystem mit der Prüfkammer (3) verbunden wird und dann, zum Festhalten eines momentanen Druckes in der Prüfkammer (3) als Referenzdruck im System, von ihr abgetrennt wird.

4. Verfahren nach Anspruch 3, dadurch gekennzeichnet, dass beide Eingänge eines Differenzdrucksensors über parallel geschaltete Leitungen, wovon die eine über das Referenzdrucksystem (23a) führt, mit der Prüfkammer (3) verbunden werden, dann das Referenzdrucksystem (23a) von der Prüfkammer abgetrennt wird und der dann in der Prüfkammer herrschende Druck als Referenzdruck festgehalten wird.

5. Verfahren nach Anspruch 4, dadurch gekennzeichnet, dass die eine Leitung (23), dem Sensoreingang unmittelbar vorgelagert, von der Prüfkammer abgetrennt wird und im von der Prüfkammer abgetrennten Leitungsstück (23a), als Referenzdrucksystem, der Referenzdruck festgehalten wird.

6. Verfahren nach einem der Ansprüche 1 bis 5, dadurch gekennzeichnet, dass ein Druck in einer Prüfkammer, mit einem vom Volumen des Hohlkörpers (1) abhängigen Volumen, als das Volumenverhalten des Hohlkörpers anzeigende Grösse ausgewertet wird.

7. Verfahren nach einem der Ansprüche 2 bis 6, dadurch gekennzeichnet, dass man die Auswertung des Sensorausgangssignals zu einem vorgegebenen Zeitpunkt punktuell oder zu zwei oder mehr Zeitpunkten oder kontinuierlich vornimmt.

8. Verfahren nach einem der Ansprüche 1 bis 7, dadurch gekennzeichnet, dass man die ausgewertete Druckgrösse mit vorgegebenen, vorzugsweise abgespeicherten (39) SOLL-Druckwerten bzw. SOLL-Druckverläufen vergleicht und aus dem Vergleichsresultat auf Hohlkörperausschuss schliesst.

9. Verwendung einer Anordnung mit einem Hohlkörper (1), welche ein von dessen Volumen abhängiges Volumen (3) aufweist, und mit einem über ein Absperrglied (31) mit diesem Volumen (3) verbindbaren, gegebenen Volumen (29), weiter mit einer Einrichtung (7a) zur Beaufschlagung des gegebenen Volumens (29) mit vorgegebenem Druck und mit einer Messeinrichtung (21) für den Druck im abhängigen Volumen (3), für die Erfassung der Volumenänderung oder des Volumens des Hohlkörpers (1).

10. Verwendung des Verfahrens nach einem der Ansprüche 1 bis 8 zur Prüfung flexibler Hohlkörper, wie von Kaffeeverpackungen.

## Revendications

1. Procédé pour tester au moins un corps creux (1), selon lequel un volume donné (29) est amené à une pression prédéfinie (35) et la pression prédéfinie est déchargée dans un volume (3) dépendant du volume du corps creux (1), caractérisé en ce que la pression ($p_3$(a), $p_3$(b)) régnant, après la décharge, dans le volume (3) dépendant du volume du corps creux est évaluée comme une grandeur (s($p_3$)) indiquant la variation de volume ou le volume du corps creux (1) lors d'une sollicitation par pression.

2. Procédé selon la revendication 1, caractérisé en ce que le corps creux (1) est soumis dans une chambre d'essai (3) à une différence de pression entre l'intérieur ($p_{i1}$) du corps creux et la pression externe ($p_3$) du corps creux, et la pression régnant dans la chambre d'essai est mesurée à l'aide d'un détecteur de pression (21).

3.  Procédé selon la revendication 2, caractérisé en ce qu'un système de pression de référence est relié à la chambre d'essai (3), puis séparé de celle-ci afin de maintenir une pression momentanée dans la chambre d'essai (3), comme pression de référence dans le système.

4.  Procédé selon la revendication 3, caractérisé en ce que les deux entrées d'un détecteur de pression différentielle sont reliées à la chambre d'essai (3) par l'intermédiaire de conduites montées en parallèle, dont l'une passe par le système de pression de référence (23a), puis le système de pression de référence (23a) est séparé de la chambre d'essai et la pression qui règne alors dans ladite chambre d'essai est maintenue comme pression de référence.

5.  Procédé selon la revendication 4, caractérisé en ce que la conduite (23) montée juste avant l'entrée du détecteur est séparée de la chambre d'essai et la pression de référence est maintenue dans la section de conduite (23a) séparée de la chambre d'essai, comme système de pression de référence.

6.  Procédé selon l'une des revendications 1 à 5, caractérisé en ce qu'une pression régnant dans une chambre d'essai, avec un volume dépendant du volume du corps creux (1), est évaluée comme la grandeur indiquant la variation de volume du corps creux.

7.  Procédé selon l'une des revendications 2 à 6, caractérisé en ce que l'on procède à l'évaluation du signal de sortie du détecteur ponctuellement, à un moment prédéfini, ou en continu, à deux moments ou plus.

8.  Procédé selon l'une des revendications 1 à 7, caractérisé en ce que l'on compare la grandeur de pression évaluée à des valeurs de pression théoriques ou à des courbes de pression théoriques prédéfinies et de préférence mises en mémoire (39), et on déduit du résultat de la comparaison que le corps creux est une pièce manquée.

9.  Utilisation d'un agencement formé d'un corps creux (1) comportant un volume (3) dépendant du volume dudit corps creux, d'un volume donné (29) qui est apte à être relié à ce volume (3) par l'intermédiaire d'un organe d'arrêt (31), d'un dispositif (7a) pour solliciter le volume donné (29) à l'aide d'une pression prédéfinie, et d'un dispositif de mesure (21) pour la pression régnant dans le volume dépendant (3), pour enregistrer la variation de volume ou le volume du corps creux (1).

10. Utilisation du procédé selon l'une des revendications 1 à 8 pour tester des corps creux flexibles tels que des emballages de café.

**Claims**

1.  Method for testing at least one hollow body (1), in which a given volume (29) is pressurised to a predetermined (35) value and the predetermined pressure is discharged into a volume (3) which is dependent upon the volume of the hollow body (1), characterised in that the pressure ($p_3(a)$, $p_3(b)$) produced following discharge in the volume (3) which is dependent upon the volume of the hollow body is evaluated as a magnitude ($s(p_3)$) which indicates the change in volume or the volume of the hollow body (1) when it is pressurised.

2.  Method according to claim 1, characterised in that the hollow body (1) is subjected in a test chamber (3) to a pressure difference between the internal pressure ($P_{11}$) of the hollow body and the external pressure ($p_3$) on the hollow body, and the pressure in the test chamber is measured by means of a pressure sensor (21).

3.  Method according to claim 2, characterised in that a reference pressure system is connected to the test chamber (3) and then, in order to record an instantaneous pressure in the test chamber (3) as reference pressure in the system, separated from it.

4.  Method according to claim 3, characterised in that the two inputs of a differential pressure sensor are connected to the test chamber (3) via parallel-connected lines, one of which passes via the reference pressure system (23a), the reference pressure system (23a) is then separated from the test chamber and the pressure then prevailing in the test chamber is recorded as reference pressure.

5. Method according to claim 4, characterised in that one line (23), which is disposed directly before the sensor input, is separated from the test chamber and the reference pressure is recorded in the line section (23a), as reference pressure system, which is separated from the test chamber.

6. Method according to one of claims 1 to 5, characterised in that a pressure in a test chamber of a volume which is dependent upon the volume of the hollow body (1) is evaluated as a magnitude which indicates the volumetric behaviour of the hollow body.

7. Method according to one of claims 2 to 6, characterised in that the sensor output signal is evaluated punctually at a predetermined instant or at two or more instants or continuously.

8. Method according to one of claims 1 to 7, characterised in that the evaluated pressure magnitude is compared with predetermined, preferably stored (39) DESIRED pressure values or DESIRED pressure variations and conclusions concerning hollow body rejects drawn from the comparison result.

9. Use of an arrangement with a hollow body (1), the volume (3) of which arrangement is dependent upon that of the hollow body, with a given volume (29) which can be connected to this volume (3) via a shut-off member (31), with a device (7a) for subjecting the given volume (29) to a predetermined pressure and with a measuring device (21) for the pressure in the dependent volume (3) for detecting the change in volume or the volume of the hollow body (1).

10. Use of the method according to one of claims 1 to 8 for testing flexible hollow bodies, such as coffee packages.

5

$p_3$

9

7

3

1

$p_{i_1}$

11

$s(p_3)$

$P_u$

FIG.1

$s\left(\dfrac{\Delta V}{\Delta t}\right)$

17

3

7

1

$S_7$

11

13

$\Delta$

$W$

$X$

15

FIG.3

FIG.2a

FIG.2b

FIG.4

FIG.5